# EUROPEAN PATENT APPLICATION

(11) **EP 4 546 239 A1**
(43) Date of publication of application: **30.04.2025**
(21) Application number: 24208304.6
(22) Date of filing: 23.10.2024
(51) Int. Cl.: G06Q 20/40

(54) **STOP PAYMENT SERVICE BY-PASS AND REMOVAL**

(30) Priority: 25.10.2023 US 202363593217 P; 27.09.2024 US 202418899780
(71) Applicant: Visa International Service Association, San Francisco, California 94128 (US)
(72) Inventor: GREEN, Stephen Michael, 94128 San Francisco (US); SAPRA, Ashwuni, 94128 San Francisco (US); TAHILANI, Dilip, 94128 San Francisco (US)
(74) Representative: EIP

(57) **Abstract**

This disclosure relates to a computer-implemented method for enabling a transaction bypass for a user-requested block on a merchant. The method involves receiving an authorization request message from a merchant, determining if the merchant is subject to an active block instruction, and verifying customer authentication information. If the authentication information is present and the merchant matches a block instruction, a transaction bypass message is generated and sent to the issuer. Based on the issuer's response, the active block may be removed or maintained. The method also allows for sending authentication data to the issuer for verification, and periodically receiving authorization requests from the merchant. Additional features include managing an authentication security threshold and sending status notifications to the merchant. The invention ensures secure transaction processing, providing flexible handling of user-requested merchant blocks based on customer authentication and issuer approval.

## Description

### TECHNICAL FIELD

At least some aspects of the present disclosure relate to a payment network computer bypassing a user-requested block of a merchant, and more particularly, removing the user-requested service block upon approval of the transaction by an issuer computer.

### BACKGROUND

Cardholders can enter into various types of transactions with various merchants to purchase goods and/or services. For example, a cardholder may enter into a subscription service with a merchant, such that the cardholder pays for the merchant's service on a periodic basis. The periodic interval of the payment may vary between merchants and/or between goods or services. For example, some services may require a monthly charge, while others require a yearly charge. On the other hand, some goods or services may be purchased in single-transaction intervals, such that each purchase is an individual transaction, which is incurred on a non-recurring basis.

If the cardholder cancels a subscription-type transaction, yet the cardholder continues to incur periodic charges despite the cancelation, the cardholder may request a payment block via their issuer, their issuer's appointed agent, and/or through the payment network or other networks to stop payment services to the merchant. Similarly, if a cardholder identifies improper single-transaction charges, the cardholder also may request a payment block via their issuer, their issuer's appointed agent, and/or through the payment network or other networks to stop payment services to the merchant. This can be beneficial to the cardholder to avoid improper charges and prevent the merchant from requesting further payment despite the cardholder's efforts to end such charges.

However, if the cardholder later decides to purchase goods or services from the previously blocked merchant, the transaction may be declined by the issuer, payment network, and/or other network due to the previously requested block. This can result in cardholder-initiated transactions being declined, thereby requiring cardholders to utilize different payment methods to successfully complete the transaction.

Accordingly, there is a need for devices, systems, and methods for a payment network to bypass and remove previously requested payment blocks placed by cardholders upon sufficient authentication of the transaction. The present disclosure provides various devices, systems, and methods that implement a bypass and removal of a user-requested block.

### SUMMARY

An embodiment includes a method for processing a transaction within a payment network. The method comprises receiving customer authentication information from a user device during a transaction. The method includes determining, based on the customer authentication information, whether transaction authentication is complete. The method performs one of the following actions based on a status of the transaction authentication confirmation. Declining the transaction according to a block instruction stored in the payment network based on the transaction authentication not being confirmed as complete. Alternatively, generating a transaction bypass message to override the block instruction, wherein the transaction bypass message directs the payment network to forward the transaction to an issuer for approval, while the block remains in place until issuer approval and transmitting the transaction bypass message to the issuer to prompt the issuer to either approve or decline the transaction based on the transaction authentication being confirmed as complete.

In one aspect, the method includes receiving a response message from the issuer, the response message indicating whether the transaction is approved or declined.

In another aspect, which may be combined with one or more previously recited aspects, the method includes updating the customer authentication information in the transaction bypass message and processing the transaction accordingly based on the response message indicating that the transaction is approved.

In another aspect, which may be combined with one or more previously recited aspects, the method includes removing the block instruction based on the issuer's response indicating that the transaction is approved or maintaining the block based on the transaction being declined.

In another aspect, which may be combined with one or more previously recited aspects, the method includes sending a notice message to a merchant, the notice message including the transaction bypass message and the issuer's decision and indicating the status of the block instruction against the merchant.

Another embodiment includes a computer-implemented method for enabling a transaction bypass for a merchant subject to a user-initiated block. The computer-implemented method includes receiving an authorization request message from a merchant computer. The method includes determining whether the merchant in the authorization request matches an active block instruction associated with the user. The method includes analyzing the authorization request message to identify the presence of customer authentication information. The method includes generating a transaction bypass message when both customer authentication information is present in the authorization request message and the merchant matches an active block instruction. The method includes transmitting the transaction bypass message to an issuer for determining whether to approve or decline the transaction.

In one aspect, the computer-implemented method includes receiving a decline message from the issuer and maintaining the active block instruction associated with the merchant based on the decline message.

In one aspect, which may be combined with one or more previously recited aspects, the computer-implemented method includes receiving an approval message and removing the block instruction based on the approval message.

In another aspect, which may be combined with one or more previously recited aspects, the computer-implemented method includes receiving an authentication indicator from a user device, wherein the authentication indicator represents a successful authentication from the user device.

In another aspect, which may be combined with one or more previously recited aspects, the computer-implemented method includes generating a message including a transaction block status indicator representing whether the user-requested block remains active; and notifying the merchant of the message.

In another aspect, which may be combined with one or more previously recited aspects, the computer-implemented method includes maintaining an authentication security threshold.

In another aspect, which may be combined with one or more previously recited aspects, the computer-implemented method includes receiving a response message from the issuer computer and comparing the authentication indicator in the authorization request message to the authentication security threshold.

In another aspect, which may be combined with one or more previously recited aspects, the computer-implemented method includes maintaining the active block instruction based on the authentication indicator being below the authentication security threshold and the response message includes an approval.

In another aspect, which may be combined with one or more previously recited aspects, the computer-implemented method includes removing the active block instruction based on the authentication indicator meeting or exceeding the authentication security threshold and the response message includes an approval.

Another embodiment includes a computer-implemented method for creating a transaction bypass and removal of a user-imposed block on a merchant. The computer-implemented method includes receiving an authorization request message from a merchant computer associated with a transaction. The computer-implemented method includes receiving an authentication indicator from a user device, confirming the user's consent to proceed with the transaction despite the user-imposed block. The computer-implemented method includes generating a transaction bypass in response to the received authentication indicator, enabling the transaction to proceed despite the user-imposed block. The computer-implemented method includes removing, by the payment network computer, the user-imposed block on the merchant based on the generated transaction bypass.

In one aspect, the computer-implemented method includes generating a referral message containing the transaction bypass and authentication indicator.

In another aspect of the computer-implemented method, which may be combined with one or more previously recited aspects, the authentication indicator is a strong customer authentication indicator.

In another aspect, which may be combined with one or more previously recited aspects, the computer-implemented method includes sending, by the payment network computer, the referral message to an issuer for further processing.

In another aspect, which may be combined with one or more previously recited aspects, the computer-implemented method includes receiving a response message from the issuer computer, the response message indicating approval or decline of the transaction.

In another aspect, which may be combined with one or more previously recited aspects, the computer-implemented method includes maintaining the user-imposed block based on the response message from the issuer computer including a decline of the transaction.

Another embodiment includes a computer-implemented method for creating a transaction bypass of a user-requested block of a merchant. The computer-implemented method includes receiving, by a payment network computer, an authorization request message from a merchant computer; determining, by payment network computer, whether a merchant matches an active block instruction; determining, by the payment network computer, a presence of customer authentication information in the authorization request message; generating, by the payment network computer, a transaction bypass message based on the presence of customer authentication information in the authorization request message and a matching active block instruction of the merchant; sending, by the payment network computer, the transaction bypass message to an issuer computer; receiving, by the payment network computer, a response message from the issuer computer; and removing, by the payment network computer, the active block instruction of the merchant based on the response message comprising an approve message from the issuer computer.

In one aspect of the computer-implemented method, the response message from the issuer computer comprises a decline message and wherein the method comprises maintaining, by the payment network computer, the active block instruction of the merchant based on the response message comprising the decline message from the issuer computer.

In another aspect of the computer-implemented method, which may be combined with one or more previously recited aspects, the customer authentication information in the authorization request message comprises an authentication indication.

In another aspect of the computer-implemented method, which may be combined with one or more previously recited aspects, the authentication indication is a strong customer authentication indication.

In another aspect, which may be combined with one or more previously recited aspects, the computer-implemented method includes receiving, by the payment network computer, an authentication indication from a user device.

In another aspect of the computer-implemented method, which may be combined with one or more previously recited aspects, the authentication indication is a successful authentication from the user device.

In another aspect of the computer-implemented method, which may be combined with one or more previously recited aspects, the customer authentication information in the authorization request message includes authentication data. The computer-implemented method includes sending, by the payment network computer, the authentication data to the issuer computer for authentication verification.

In another aspect of the computer-implemented method, which may be combined with one or more previously recited aspects, the active block instruction is stored in a server. The server further stores a user profile, and wherein the method comprises determining, by the payment network computer, whether the active block instruction is associated with the user profile.

In another aspect, which may be combined with one or more previously recited aspects, the computer-implemented method includes periodically receiving, by the payment network computer, the authorization request message periodically generated by the merchant computer.

In another aspect, which may be combined with one or more previously recited aspects, the authorization request message includes an authentication indicator; a transaction amount; a merchant identifier; and a user profile.

In another aspect, which may be combined with one or more previously recited aspects, the authorization request message includes the authorization request message comprises initial request data and the transaction bypass message comprises the initial request data.

In another aspect, which may be combined with one or more previously recited aspects, the computer-implemented method includes generating, by the payment network computer, a notice message based on the response message. The notice message includes a transaction status indicator and sending, by the payment network computer, the notice message to the merchant computer.

In another aspect of the computer-implemented method, which may be combined with one or more previously recited aspects, the notice message includes a block status indicator. The block status indicator represents whether the user-requested block is active.

In another aspect, which may be combined with one or more previously recited aspects, the computer-implemented method includes: maintaining, by the payment network computer, an authentication security threshold; receiving, by the payment network computer, a response message from the issuer computer; comparing, by the payment network computer, an authentication indication in the authorization request message to the authentication security threshold; and maintaining, by the payment network computer, the active block instruction based on the authentication indication below the authentication security threshold and the response message comprising the approve message; and removing, by the payment network computer, the active block instruction based on the authentication indication equal to or above the authentication security threshold and the response message comprising the approve message.

Another embodiment includes a computer-implemented method for creating a transaction bypass and removal of a user-requested block of a merchant. The computer-implemented method includes receiving, by a payment network computer, an authorization request message from a merchant computer; receiving, by the payment network computer, an authentication indication from a user device; generating, by the payment network computer, a transaction bypass of a user-requested block based on the authentication indicator; removing, by the payment network computer, the user-requested block based on the transaction bypass message; generating, by the payment network computer, a referral message based on the transaction bypass, wherein the referral message comprises the authentication indication; sending, by the payment network computer, the referral message to an issuer computer; receiving, by the payment network computer, a response message from the issuer computer; and reviving, by the payment network computer, the user-requested block based on the response message comprising a decline message.

In one aspect of the computer-implemented method, the authorization request message includes the authentication indication.

In another aspect of the computer-implemented method, which may be combined with one or more previously recited aspects, the authentication indication is a strong customer authentication indicator.

In another aspect of the computer-implemented method, which may be combined with one or more previously recited aspects, the user-requested block is stored in a server, wherein the server further stores a user profile, and wherein the method comprises: determining, by the payment network computer, whether the user-requested block is associated with the user profile; and removing, by the payment network computer, the user-requested block from the user profile based on the response message comprising an approve message.

In another aspect of the computer-implemented method, which may be combined with one or more previously recited aspects, the method further comprises: generating, by the payment network computer, a notice message based on the response message, wherein the notice message comprises a transaction status indicator; and sending, by the payment network computer, the notice message to the merchant computer.

In another aspect of the computer-implemented method, which may be combined with one or more previously recited aspects, the notice message further comprises a block status indicator, wherein the block status indicator represents whether the user-requested block is active.

### BRIEF DESCRIPTION OF THE DRAWINGS

In the description, for purposes of explanation and not limitation, specific details are set forth, such as particular aspects, procedures, techniques, etc. to provide a thorough understanding of the present technology. However, it will be apparent to one skilled in the art that the present technology may be practiced in other aspects that depart from these specific details.

The accompanying drawings, together with the detailed description below, are incorporated in and form part of the specification, and serve to further illustrate aspects of concepts that include the claimed disclosure and explain various principles and advantages of those aspects.

The apparatuses and methods disclosed herein have been represented where appropriate by conventional symbols in the drawings, showing only those specific details that are pertinent to understanding the various aspects of the present disclosure so as not to obscure the disclosure with details that will be readily apparent to those of ordinary skill in the art having the benefit of the description herein.
FIG. 1 is a flow diagram of a transaction bypass method for a payment network computer to create a transaction bypass and remove a user-requested block by a merchant, in accordance with at least one aspect of the present disclosure.
FIG. 2 is a flow diagram of a transaction bypass method for a payment network computer to create a transaction bypass and remove a user-requested block by a merchant, in accordance with at least one aspect of the present disclosure.
FIG. 3 is a flow diagram of a transaction bypass method for a payment network computer to create a transaction bypass and remove a user-requested block by a merchant, in accordance with at least one aspect of the present disclosure.
FIG. 4 is a flow diagram of a method for processing a transaction within a payment network, in accordance with at least one aspect of the present disclosure.
FIG. 5 is a block diagram of a payment network system, in accordance with at least one aspect of the present disclosure.
FIG. 6 is a block diagram of a computer apparatus with data processing subsystems or components, in accordance with at least one aspect of the present disclosure.
FIG. 7 is a diagrammatic representation of an example computer system that includes a host machine, in accordance with at least one aspect of the present disclosure.

Corresponding reference characters indicate corresponding parts throughout the several views. The exemplifications set out herein illustrate various aspects of the present disclosure, in one form, and such exemplifications are not to be construed as limiting the scope of the disclosure in any manner.

### DESCRIPTION

The following disclosure may provide exemplary systems, devices, and methods for conducting a financial transaction and related activities. Although reference may be made to such financial transactions in the examples provided below, aspects are not so limited. That is, the systems, methods, and apparatuses may be utilized for any suitable purpose.

Before discussing specific embodiments, aspects, or examples, some descriptions of terms used herein are provided below.

A "payment network" may refer to an electronic payment system used to accept, transmit, or process transactions made by payment devices for money, goods, or services. The payment network may transfer information and funds among issuers, acquirers, merchants, and payment device users. One illustrative non-limiting example of a payment network is VisaNet, which is operated by Visa, Inc.

As used herein, the term "merchant" may refer to one or more individuals or entities (e.g., operators of retail businesses that provide goods and/or services, and/or access to goods and/or services, to a user (e.g., a customer, a consumer, a customer of the merchant, and/or the like) based on a transaction (e.g., a payment transaction)). As used herein "merchant system" may refer to one or more computer systems operated by or on behalf of a merchant, such as a server computer executing one or more software applications.

An "issuer" can include a payment account issuer. The payment account (which may be associated with one or more payment devices) may refer to any suitable payment account (e.g., credit card account, a checking account, a savings account, a merchant account assigned to a consumer, or a prepaid account), an employment account, an identification account, an enrollment account (e.g., a student account), etc.

The terms "issuer institution," "portable financial device issuer," "issuer," or "issuer bank" may refer to one or more entities that provide one or more accounts (e.g., a credit account, a debit account, a credit card account, a debit card account, and/or the like) to a user (e.g., customer, consumer, and/or the like) for conducting transactions (e.g., payment transactions), such as initiating credit and/or debit payments. For example, an issuer may provide an account identifier, such as a personal account number (PAN), to a user that uniquely identifies one or more accounts associated with the user. The account identifier may be used by the user to conduct a payment transaction. The account identifier may be embodied on a portable financial device, such as a physical financial instrument, e.g., a payment card, and/or may be electronic and used for electronic payments. In some non-limiting embodiments or aspects, an issuer may be associated with a bank identification number (BIN) that uniquely identifies the issuer. As used herein "issuer system" or "issuer institution system" may refer to one or more systems operated by or operated on behalf of an issuer. For example, an issuer system may refer to a server executing one or more software applications associated with the issuer. In some non-limiting embodiments or aspects, an issuer system may include one or more servers (e.g., one or more authorization servers) for authorizing a payment transaction.

As used herein, "authentication" is a process by which the credential of an endpoint (including but not limited to applications, people, devices, process, and systems) can be verified to ensure that the endpoint is who they are declared to be. An "authorization request message" may be an electronic message that is sent to a payment processing network and/or an issuer of a payment account to request authorization for a payment transaction. An authorization request message according to some embodiments or aspects may comply with International Organization for Standardization (ISO) 8583, which is a standard for systems that exchange electronic transaction information associated with a payment made by a consumer using a payment device or a payment account. An ISO 8583 message includes a message type indicator, one or more bitmaps indicating which data elements are present in the message, and data elements of the message.

The authorization request message may include an issuer account identifier that may be associated with a payment device or payment account. An authorization request message may be generated by an acceptance device or a server and may be sent to an issuing financial institution directly or through a payment network. In some embodiments or aspects of the present disclosure, an authorization request message may include a payment token, an expiration date, a token presentment mode, a token requestor identifier, a token cryptogram, a token assurance level, and data used to generate the token assurance level. The payment token may include a payment token issuer identifier that may be a substitute for a real issuer identifier for an issuer. For example, the real issuer identifier may be part of a BIN range associated with the issuer.

An authorization request message also may comprise additional data elements corresponding to "identification information" including, for example, a service code, a CVV or CVC (card verification value or code), a dCVV or dCVC (dynamic card verification value or code), token cryptogram, an expiration date, etc. An authorization request message may also comprise "transaction information," such as any information associated with a current transaction (e.g., the transaction amount, merchant identifier, merchant location, etc.) as well as any other information that may be utilized in determining whether to identify and/or authorize a payment transaction.

The terms "client device" and "user device" refer to any electronic device that is configured to communicate with one or more servers or remote devices and/or systems. A client device or a user device may include a mobile device, a network-enabled appliance (e.g., a network-enabled television, refrigerator, thermostat, and/or the like), a computer, a POS system, and/or any other device or system capable of communicating with a network. A client device may further include a desktop computer, laptop computer, mobile computer (e.g., smartphone), a wearable computer (e.g., a watch, pair of glasses, lens, clothing, and/or the like), a cellular phone, a network-enabled appliance (e.g., a network-enabled television, refrigerator, thermostat, and/or the like), a point-of-sale (POS) system, and/or any other device, system, and/or software application configured to communicate with a remote device or system.

A "user" may include an individual. In some embodiments or aspects, a user may be associated with one or more personal accounts, payment cards, and/or portable electronic devices. The user also may be referred to as a cardholder, account holder, or consumer.

As described herein, it can be beneficial for cardholders, e.g., users, to request a payment block be placed on a merchant via their issuer, their issuer's appointed agent, and/or through the payment network or other networks in order to prevent recurring charges after the cardholder has unsuccessfully attempted to cancel or prevent further transactions with the merchant. For example, it may be beneficial for a cardholder to request a payment block to prevent periodically recurring charges incurred by a subscription service. Upon such a request, the issuer, the issuer's appointed agent, and/or the payment network or other network can place the block to stop payment services to the merchant for the particular cardholder.

However, placing such a block against a merchant can make it difficult for a cardholder to reinitiate transactions with the merchant. For example, if a payment block has been placed on a merchant per the cardholder's request, and the cardholder later decides to re-subscribe to the merchant's service, the transaction may be declined due to the block. In other words, despite all other transaction requirements being met, the transaction may still be declined by the payment network because of the block placed on the merchant, as requested by the cardholder at a previous time. Thus, the cardholder is unable to use the desired payment method to complete the transaction and the merchant is left with a disgruntled customer because they cannot complete the desired transaction. Accordingly, the present disclosure provides devices, systems, and methods for a payment network to bypass and remove previously requested payment blocks placed by cardholders upon sufficient authentication of the transaction.

The present disclosure provides various devices, systems, and methods for a payment network to bypass and remove a user-requested block. For example, according to some aspects of the present disclosure, a payment network computer can receive an initial request message from a merchant computer (e.g., a transaction request, an authorization request message, an authentication request) and an authentication indicator (e.g., a successful authentication indicator in an authorization request message, data indicating an authentication request has been requested) from a user device. Based on the authentication indicator, the payment network computer can generate a transaction bypass of the user-requested block of the merchant, and the payment network computer can further generate a referral message based on the transaction bypass. The referral message can be sent by the payment network computer to an issuer computer for further processing of the transaction.

The payment network computer further can receive a response message from the issuer computer, where the response message indicates whether the issuer approved or declined the transaction. The payment network computer can remove the user-requested block based on the response message comprising an approval from the issuer. Removal of the block is beneficial in that it ensures that future transactions between the user and the merchant do not need to generate a bypass. Instead, in such instances, the removal of the block allows the merchant and the user to transact as if the user-requested block was never put in place.

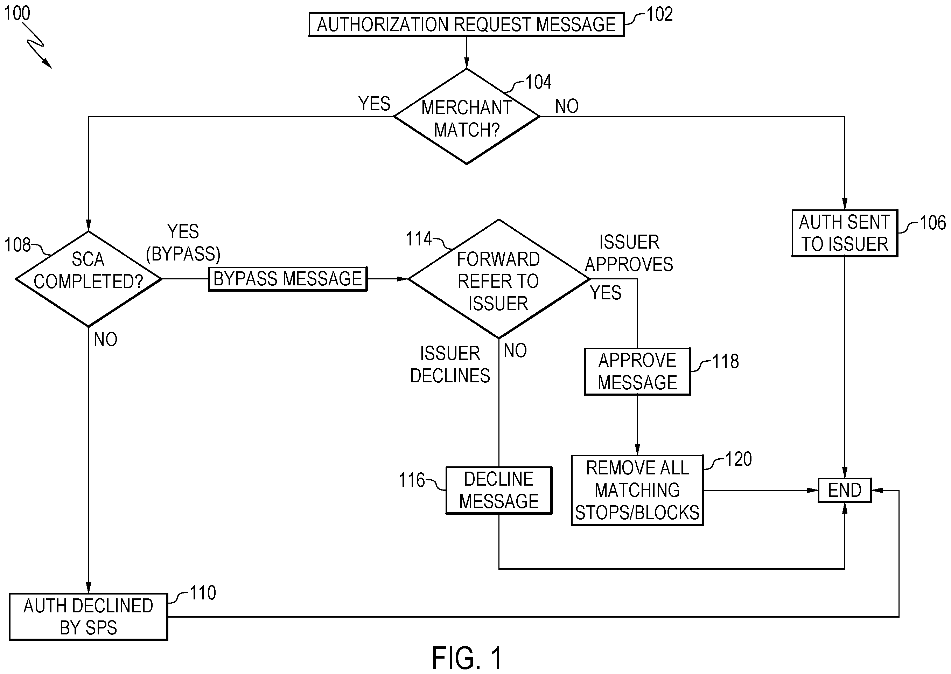

Turning now to the figures, FIG. 1 is a flow diagram of a transaction bypass method 100 to generate a transaction bypass and remove a user-requested block based on an authorization request message 102 from a merchant and customer authentication information, in accordance with at least one aspect of the present disclosure. Customer authentication information may comprise a customer authentication indication. When a cardholder, e.g., user, places a block via their issuer, their issuer's appointed agent, and/or through the payment network or other networks in a stop payment service hosted by a payment network to prevent future recurring payments to a merchant (e.g., Netflix, Amazon Prime, among others, for example) and later decides to take out a new subscription from the merchant, the merchant conducts a strong customer service authentication (SCA). By way of example, a payment network may employ a Stop Payment Service (SPS) to enable the issuers of the payment network card to stop card-on-file payments (including recurring and installment) from being authorized, cleared, and settled through the payment network. The service can help provide the issuers of the payment network card with a method for handling cardholder stop payment requests.

As shown in FIG. 1, a payment network receives an authorization request message 102 from a merchant. The authorization request message 102 is to authorize the merchant for a new transaction from a cardholder, e.g., user, account holder. The transaction may be a single transaction or a recurring transaction, e.g., a subscription. The authorization request message 102 may take various forms. For example, the authorization request message 102 may be in the form of a packet-type message, which includes transaction data for a particular transaction initiated by the cardholder. The transaction data may include transaction attributes such as a personal account number (PAN), a transaction amount, a currency, a date and time, an authentication code, and/or a merchant identifier. Although the authorization request message 102 may be capable of including various types of data from multiple sources, the authorization request message 102 includes the transaction data required by the issuer to approve or decline the transaction. The transaction data may vary depending on requirements set by an issuer and the type of transaction. However, in accordance with the present disclosure, at least a merchant identifier is necessary to determine whether there is an active block instruction associated with the merchant. The merchant identifier may include a merchant code or the name of the merchant.

The authorization request message 102 may include customer authentication information and/or a cardholder profile. At the outset, the payment network determines 104 whether the merchant that sent the authorization request message 102, as indicated by a merchant identifier embedded within the authorization request message 102, matches an active block instruction in the payment network. If there is no active block instruction associated with the merchant, the transaction bypass method 100 proceeds along the "NO" path and the payment network sends 106 the authorization request message 102 to the issuer for approval. In such aspects, no transaction bypass message is created.

However, in accordance with the present disclosure, if the payment network determines there is an active block instruction associated with the merchant, the transaction bypass method 100 proceeds along the "YES" path and determines 108 whether there is customer authentication information, such as for example, a strong customer authentication (SCA) indication included in the authorization request message 102. Accordingly, if the authorization request message 102 does not include a SCA indication, the transaction bypass method 100 proceeds along the "NO" path and the payment network declines 110 the authorization request. However, if the authorization request message 102 includes a SCA indication, the transaction bypass method 100 proceeds along the "YES" path and the payment network generates a transaction bypass message 112 of an active user-requested block of the merchant and sends it to the issuer for evaluation. The transaction bypass message 112 may be referred to as a referral message or forward-refer message.

In accordance with the present disclosure, if the payment network determines there is an active block instruction associated with the merchant, the transaction bypass method 100 proceeds along the "YES" path and determines 108 whether there is a successful SCA indication included in the authorization request message 102. This is in contrast to the above example where the mere presence of an SCA indication included in the authorization request message 102 would suffice. Accordingly, if the authorization request message 102 does not include a successful SCA indication, the transaction bypass method 100 proceeds along the "NO" path and the payment network declines 110 the authorization request. However, if the authorization request message 102 includes a successful SCA indication, the transaction bypass method 100 proceeds along the "YES" path and the payment network sends a transaction bypass message 112 to the issuer. Throughout the remainder of this description, SCA indication and successful SCA indication may be referred to as SCA/Successful SAC indication.

In this instance, the payment network forward-refers the transaction bypass message 112 to the issuer for approval instead of declining the transaction based on the matching block, as would normally be case. The issuer now determines 114 whether to approve the transaction. If the issuer does not approve the transaction, the transaction bypass method 100 proceeds along the "NO" path, the issuer declines the transaction and leaves the matching block in place. On the other hand, if the issuer approves the transaction, the transaction bypass method 100 proceeds along the "YES" path, the issuer approves the transaction and instructs the payment network to remove 120 or cancel any matching blocks.

The customer authentication information in the authorization request message 102 provides the requisite security needed to bypass the matching block. Without customer authentication information, it would be unclear whether the merchant improperly initiated a transaction which the user had previously requested be blocked, or whether the merchant properly initiated the transaction because the user re-initiated service with the merchant. Thus, the user provided customer authentication information informs the payment network that the user intended to initiate or re-initiate a transaction with the previously blocked merchant.

The customer authentication information may take various forms. For example, the customer authentication information may be an SCA as described in the example illustrated in FIG. 1. Additionally, the customer authentication information may be authentication data that can be further processed to determine whether the user successfully completed the authentication. Alternatively, the customer authentication information may be a successful authentication by the user. The customer authentication information can be a numeric value (e.g., 0-100, 0.0-1.0) or an alphanumeric value (e.g., A1-ZZ100).

Further, as described in the example of FIG. 1, the customer authentication information may be included in the authorization request message 102 from the merchant. For example, the customer authentication information may be embedded in a predefined field or position of the authorization request message 102. Alternatively, the payment network receives the customer authentication information from a user device.

Referring still to FIG. 1, if the payment network cannot confirm that authentication of the transaction has been completed via the customer authentication information received from a user device, the payment network will decline the transaction in accordance with the stop payment service instructions resulting from the block. The payment network need only verify that authentication data is present to prevent declination of the requested transaction. In such instances, the customer authentication information may have data present indicating that an authentication of the transaction occurred but may or may not indicate whether the authentication was successful.

If the payment network has confirmed completion of the authentication of the requested transaction via the customer authentication information received from a user device, the payment network can generate a transaction bypass message 112 according to the transaction bypass method 100 shown in FIG. 1 based on the customer authentication information. The transaction bypass message 112 may take various forms, such as a standalone message or a field in a larger message.

The transaction bypass message 112 instructs the payment network to send the transaction to the issuer for approval despite the fact that a block has been placed against the merchant. In other words, the transaction bypass message 112 permits the payment network to override the block against the merchant. The transaction bypass message 112 does not remove the block until the issuer has approved the transaction. Alternatively, the transaction bypass message 112 may instruct the payment network to remove the block against the merchant prior to obtaining issuer approval if the customer authentication information comprises a successful authentication from the user device.

The transaction bypass message 112 may take various forms, such as a packet-type message or an authorization request message. The transaction bypass message 112 may include the authorization indication as a field or position of the transaction bypass message 112. Alternatively, the transaction bypass message 112 may include the authentication data as the customer authentication information, such that the issuer computer can verify that the user successfully completed an authentication of the transaction.

Referring still to FIG. 1, the payment network sends the transaction bypass message 112 to the issuer to process the transaction and decide as to whether to approve or decline the transaction. In general, the issuer may determine whether to approve or decline a transaction based on a variety of factors, including the user's account standing and/or sufficiency of funds available to approve the request.

Once the issuer has decided as to whether or not to approve the transaction, the issuer may send a response message including the issuer's decision, which is received by the payment network. The response message may take various forms, such as a packet-type message. As shown in FIG. 1 the response message may be decline message 116 or an approve message 118.

The response message, decline or approve message 116, 118, may be in the same format as the transaction bypass message 112, or it may be in a different format. If the response message is provided in the same format as the transaction bypass message 112, the issuer computer may replace a field in the transaction bypass message 112 rather than generating a new message, e.g., the response message. For example, if the issuer approves the transaction, the issuer may update the customer authentication information included in the referral message. The issuer then may send back the modified transaction bypass message 112 as the response message. In such examples, the payment network would receive the response message with the updated field and proceed in accordance with the updated message, e.g., the response message.

If the issuer replaces a field of the transaction bypass message 112 and sends the updated message, e.g., the approve message 118 comprising the issuer's approval of the transaction to the payment network, then the payment network computer may remove 120 the block against the merchant. Alternatively, the payment network computer may remove the block if the response message indicates that the issuer approved the transaction, regardless of whether the response message explicitly instructs the payment network to remove 120 the block.

In accordance with the present disclosure, the payment network may not remove the block, yet still approve the transaction according to the transaction bypass method 100. For example, the payment network may require an authentication security threshold be set. The authentication security threshold may be determined by one or more entities, such as, for example, the payment network or the user. If the customer authentication information does not satisfy the authentication security threshold, but the customer authentication information is sufficient to permit the issuer to approve the transaction, then despite the creation of a transaction bypass message 112, the payment network may not remove the block matching the merchant.

Referring again to FIG. 1, if the response message received by the payment network indicates that the issuer declined the transaction, the user-requested block against the merchant will remain in place.

However, as discussed previously, the payment network may remove the block prior to sending the transaction bypass message 112 to the issuer. In such instances, if the payment network receives a decline message 116 from the issuer indicating the declination of the transaction, then the payment network may maintain the block against the merchant.

The payment network may generate a notice message based on the response message. The notice message may include the transaction bypass message 112 and the determination of the issuer to approve or deny the transaction. The notice message may be sent to the merchant to inform the merchant that the at-issue transaction required a transaction bypass. Additionally, the notice message can inform the merchant that the transaction was either approved or declined, and the status of the block against the merchant (e.g., removed, maintained, reinstated). Providing the notice message back to the merchant is beneficial because it ensures that the merchant is aware of the status the user account in order to avoid potential issues in the future.

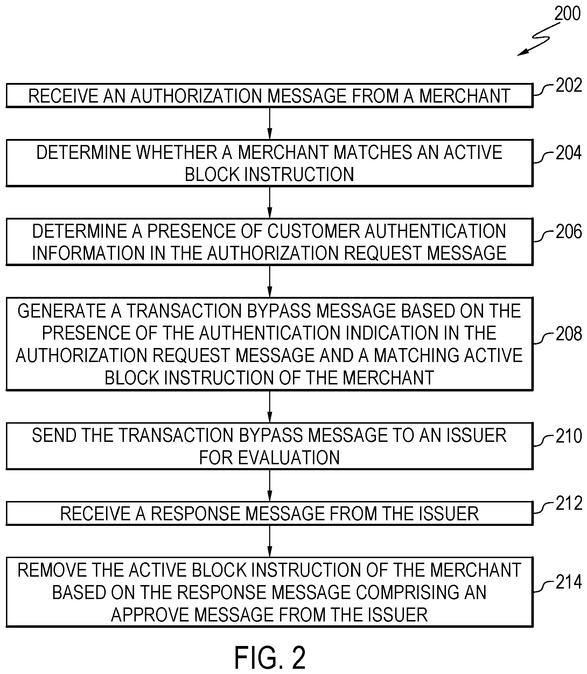

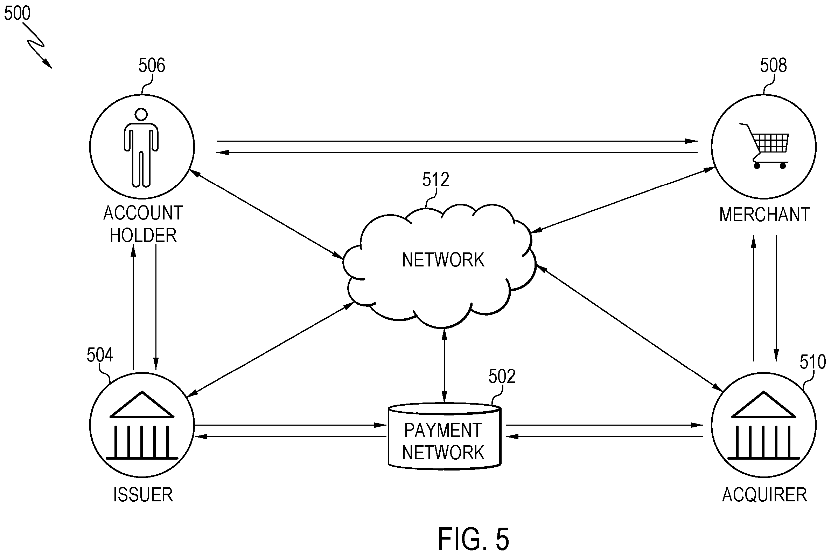

FIG. 2 illustrates a computer-implemented transaction bypass method 200 of the transaction bypass method 100 shown in FIG. 1 for creating a transaction bypass of a user-requested block of a merchant, in accordance with at least one aspect of the present disclosure. With reference to FIG. 2, together with FIGS. 1 and 5, according to the transaction bypass method 200, a payment network 502 computer receives 202 an authorization request message 102 from a merchant 508 computer. The authorization request message 102 requests an authorization of a single or recurring transaction initiated by the cardholder (e.g., user, customer, consumer, and the like). The authorization request message 102 may include customer authentication information associated with the transaction. The customer authentication information may include a customer authentication indication or a successful customer authentication indication. The customer authentication information may be an SCA indication or a successful SCA indication as described above with reference to FIG. 1.

With continued reference to FIGS. 1-2 and 5, the payment network 502 computer determines whether a merchant 508 identified in the authorization request message 102 matches an active block instruction placed by a stop payment service hosted by the payment network 502 to prevent future recurring payments to a merchant 508. As previously discussed, the cardholder may have previously placed a block via their issuer, their issuer's appointed agent, and/or through the payment network or other networks in the stop payment service hosted by the payment network 502 to prevent future recurring payments from the merchant 508 and later decided to take out a new subscription from the merchant 508. In certain instances, when this occurs, the merchant 508 conducts an SCA of the cardholder and places an SCA indication, whether successful or otherwise, in the authorization request message 102 to the payment network 502.

With continued reference to FIGS. 1-2 and 5, if the merchant 508 identified in the authorization request message 102 does not match an active block instruction placed by a stop payment service hosted by the payment network 502, the method 200 ends without removing the block. However, if the payment network 502 computer determines that the merchant 508 identified in the authorization request message 102 matches an active block instruction placed by the stop payment service hosted by the payment network 502, the payment network 502 computer determines 206 the presence of customer authentication information in the authorization request message 102. If the payment network 502 computer determines that there is no customer authentication information in the authorization request message 102, the stop payment service hosted by the payment network 502 declines the requested transaction and the method 200 ends without removing the block.

On the other hand, if the payment network 502 computer determines that customer authentication information is present in the authorization request message 102, the payment network 502 computer generates 208 a transaction bypass message 112. The payment network 502 computer generates the transaction bypass message 112 based on the presence of the authentication indication in the authorization request message 102 and a matching active block instruction of the merchant in the stop payment service hosted by the payment network 502.

The payment network 502 computer sends 210 the transaction bypass message 112 to an issuer 504 computer for evaluation. At this instance, the issuer 504 computer determines 114 whether to approve the requested transaction. The issuer 504 computer may approve or decline the requested transaction based on a variety of factors and sends a response message to the payment network 502 computer. The payment network 502 computer receives 212 the response message from the issuer 504 computer and removes 214 the user-requested active block instruction of the merchant 508 based on the response message comprising an approve message 118 from the issuer 504. The response message may include either a decline message 116 or the approve message 118.

In one example, the issuer 504 computer may decline the requested transaction if there is no customer authentication information present in the transaction bypass message 112. This may occur if there is no SCA indication in the bypass message 112. In another example, the issuer 504 computer may decline the requested transaction if customer authentication information is present in the transaction bypass message 112, but the customer authentication information indicates that the merchant 508 did not successfully complete the authentication. This may occur if an SCA indication is present in the bypass message 112, but the customer authentication information indicates that the merchant 508 did not successfully complete the SCA. The issuer 504 computer may decline the requested transaction based on the user's account being in poor standing and/or insufficiency of funds available to approve the requested transaction. If the issuer 504 computer declines the requested transaction, the issuer 504 computer sends a decline message 116 to the payment network 502 computer and the method 200 ends without removing the block.

Conversely, in one example, the issuer 504 computer may approve the requested transaction if there is customer authentication information is present in the transaction bypass message 112. This may occur based on the mere presence of an SCA indication in the bypass message 112. In another example, the issuer 504 computer may approve the requested transaction if customer authentication information is present in the transaction bypass message 112 and the customer authentication information indicates that the merchant 508 successfully completed the authentication. This may occur if an SCA indication is present in the bypass message 112 and the customer authentication information indicates that the merchant 508 successfully completed the SCA. The issuer 504 computer may approve the requested transaction based on the user's account being in good standing and/or sufficiency of funds available to approve the requested transaction. If the issuer 504 computer approves the requested transaction, the issuer 504 computer sends an approve message 118 to the payment network 502 computer and the payment network 502 computer removes 120 all blocks and stop payments that match the merchant 508 in the stop payment service hosted by the payment network 502 and the method 200.

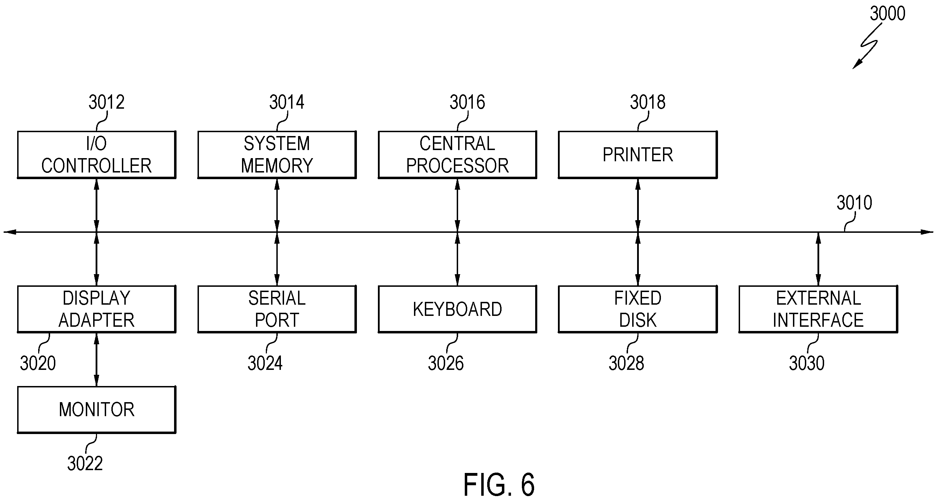

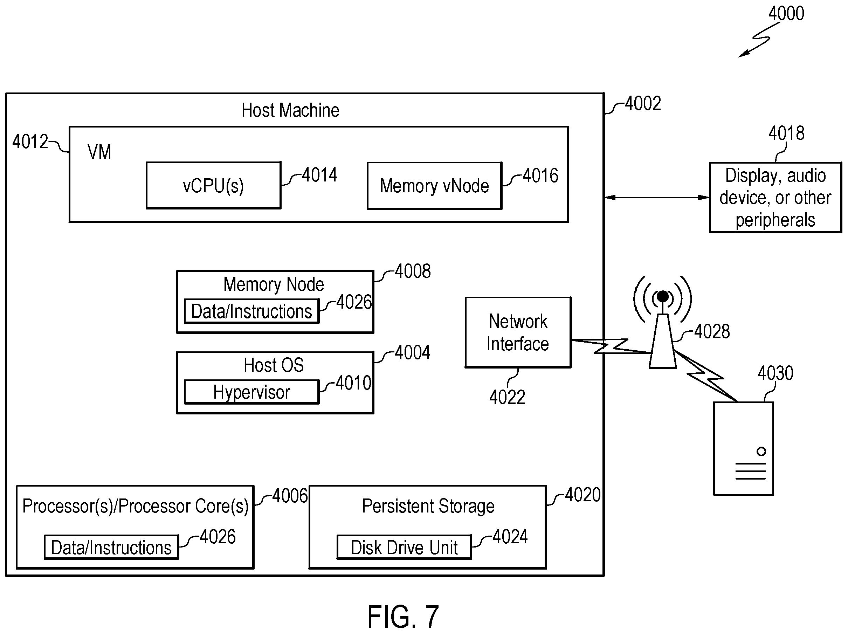

As previously discussed, the payment network 502, the issuer 504, the account holder, and/or the merchant 508 may facilitate the implementation of the methods 100, 200 described herein with reference to FIGS. 1 and 2 using the computer apparatus 3000 described hereinbelow with reference to FIG. 6 and/or the computer system 4000 described hereinbelow with reference to FIG. 7.

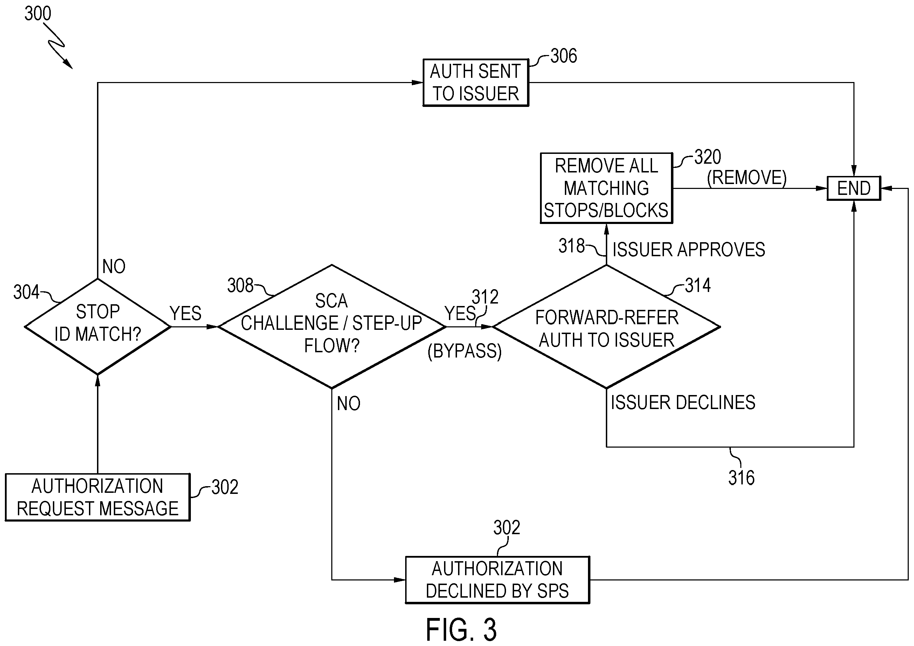

FIG. 3 is a flow diagram of a transaction bypass method 300 to generate a transaction bypass and remove a user-requested block based on an authorization request message 302 from an entity and customer authentication information, in accordance with at least one aspect of the present disclosure. Customer authentication information may comprise a customer authentication indication. When a cardholder, e.g., user, places a block via their issuer, their issuer's appointed agent, and/or through the payment network or other networks in a stop payment service hosted by a payment network to prevent future recurring payments to a merchant (e.g., Netflix, Amazon Prime, among others, for example) and later decides to take out a new subscription from the merchant, the merchant conducts a SCA. By way of example, a payment network may employ a SPS to enable the issuers of the payment network card to stop card-on-file payments (including recurring and installment) from being authorized, cleared, and settled through the payment network. The service can help provide the issuers of the payment network card with a method for handling cardholder stop payment requests.

As illustrated in FIG. 3, a payment network processes an authorization request message 302. This message seeks approval for a new transaction initiated by a cardholder, such as a user or account holder. The transaction can be either a single occurrence or a recurring one, like a subscription. The authorization request message 302 can take various forms, such as a packet-type message containing transaction data specific to the cardholder's-initiated transaction. This data may include attributes like a Primary Account Number (PAN), transaction amount, currency, date and time, authentication code, and merchant identifier. While the message can incorporate diverse data from multiple sources, it must include the transaction data required by the issuer to approve or decline the transaction. The specific data required may vary based on the issuer's criteria and the transaction type. However, according to this disclosure, it is advantageous to have a merchant identifier in order to determine if there is an active block instruction for the merchant. This identifier may consist of a merchant code or the merchant's name.

The authorization request message 302 may include customer authentication details and/or a cardholder profile. Initially, the payment network checks 304 for an active SPS block. If no active SPS block is found, the authorization request is forwarded 306 to the issuer for approval, and no transaction bypass message is created.

However, if an active SPS block exists, the payment network assesses 308 whether there is an SCA challenge or step-up flow indication. If no SCA indication is present, the payment network declines 310 the authorization request. Conversely, if an SCA indication is detected, the payment network generates a transaction bypass message 312, also known as a referral or forward-refer message and sends it to the issuer for evaluation.

The issuer then reviews the bypass message 312 and decides 314 whether to approve the transaction. If the issuer declines 316 the transaction, the matching SPS block remains in place. If the issuer approves 318 the transaction, it authorizes the transaction and instructs the payment network to remove 320 or cancel all matching SPS stops/blocks.

The customer authentication information included in the authorization request message 302 ensures the necessary security to bypass the matching block. Without this information, it would be unclear whether a merchant improperly initiated a transaction that the user had previously requested to block, or if the transaction was properly initiated because the user re-engaged with the merchant. Therefore, the user-provided authentication information signals to the payment network that the user intended to initiate or re-initiate a transaction with the previously blocked merchant.

Customer authentication information can take various forms. For instance, it may be Strong Customer Authentication (SCA) as illustrated in FIG. 3. It could also be authentication data that can be processed to verify successful user authentication. Alternatively, it might represent a successful user authentication. This information can be expressed as a numeric value (e.g., 0-100, 0.0-1.0) or an alphanumeric value (e.g., A1-ZZ100).

Additionally, as shown in FIG. 3, the customer authentication information may be included in the authorization request message 302. It can be embedded in a predefined field or position within the message. Alternatively, the payment network may receive this information directly from a user device.

As shown in FIG. 3, if the payment network cannot verify that the transaction authentication is complete using the customer authentication information from a user device, the transaction will be declined 316 according to the SPS block instructions. The payment network only needs to confirm the presence of authentication data to avoid declining 316 the transaction. In some cases, the authentication information may indicate that an authentication attempt occurred, but not whether it was successful.

If the payment network confirms the completion of the transaction authentication through the customer authentication information, it can generate a transaction bypass message 312. This message can be a standalone communication or part of a larger message.

The transaction bypass message 312 directs the payment network to forward the transaction to the issuer for approval, even if an SPS block is in place against a merchant, for example. Essentially, it allows the payment network to override the SPS block. The block remains until the issuer approves the transaction. Alternatively, if the authentication information confirms successful authentication, the bypass message 312 may instruct the payment network to remove he SPS block before issuer approval.

The transaction bypass message 312 can take different forms, such as a packet-type message or an authorization request message. It may include the authorization indication as a specific field or position within the bypass message 312. Alternatively, it can contain authentication data as customer authentication information, enabling the issuer's computer to verify successful transaction authentication by the user.

Referring again to FIG. 3, the payment network sends the transaction bypass message 312 to the issuer, prompting them to process the transaction and decide whether to approve or decline it. The issuer's decision is generally based on several factors, including the user's account status and the availability of sufficient funds. After evaluating the transaction, the issuer sends a response message to the payment network, indicating its decision to approve 318 or decline 316 the transaction. This response message can take various forms, such as a packet-type message.

The response message, whether declining 316 or approving 318 the transaction, may use the same format as the transaction bypass message 312 or a different format. If the same format is used, the issuer can modify a field in the original transaction bypass message 312 rather than creating a new message. For instance, if the issuer approves 318 the transaction, it may update the customer authentication information within the existing transaction bypass message 312. The issuer then sends the modified message back to the payment network as the response message. The payment network will process this response, acting based on the updated information.

If the issuer modifies the transaction bypass message 312 to indicate approval 318 and sends it back to the payment network, the payment network may remove 320 any matching SPS stops/blocks. Alternatively, the payment network can remove 320 all matching SPS stops/blocks if the response message indicates approval, regardless of explicit instructions to do so.

According to this disclosure, the payment network may approve the transaction through the transaction bypass method 300 without removing the SPS block. For example, an authentication security threshold may be set by one or more entities, such as the payment network or the user. If the customer authentication information does not meet this threshold but is still sufficient for the issuer to approve the transaction, the payment network may keep the block in place, even after creating a transaction bypass message 312.

If the payment network receives a response message indicating the issuer has declined 316 the transaction, the user-requested block will remain intact. In cases where the payment network has removed the SPS block before sending the transaction bypass message 312, and it later receives a decline message 316 from the issuer, the payment network may maintain the block against the merchant.

The payment network may also generate a notice message based on the response message. This notice includes the transaction bypass message 312 and the issuer's decision. The notice message is sent to the merchant to inform them that the transaction required a bypass and whether it was approved or declined. Additionally, it communicates the status of the block against the merchant (e.g., removed, maintained, reinstated). Providing this notice helps ensure that the merchant is informed about the status of the user's account, helping to prevent potential issues in future transactions.

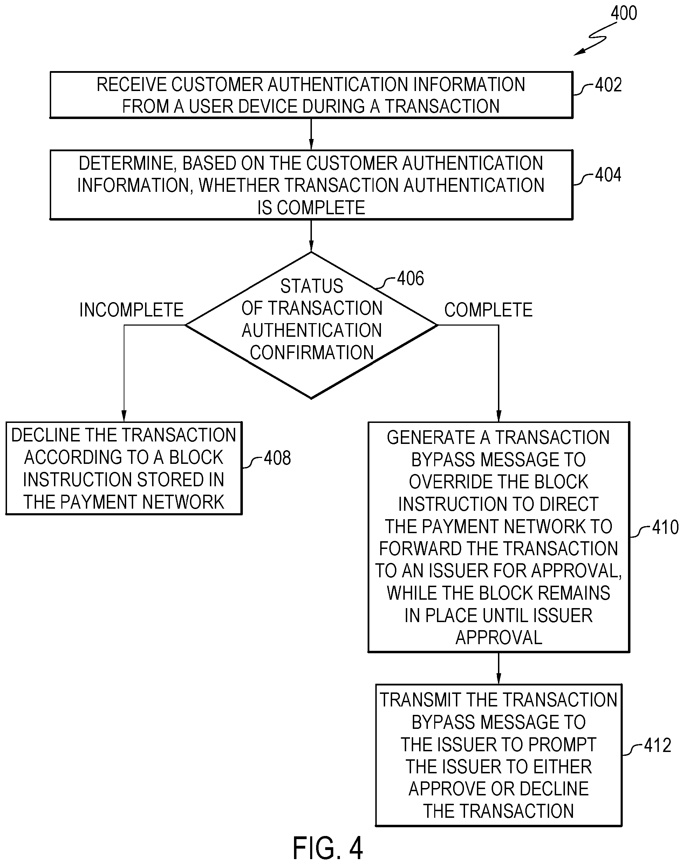

FIG. 4 is a flow diagram of a method 400 for processing a transaction within a payment network, in accordance with at least one aspect of the present disclosure. With reference to FIGS. 4 and 5, the method 400 begins by the payment network receiving 402 customer authentication information from a user device 506 during a transaction. The payment network computer 502 determines 404, based on the customer authentication information, whether transaction authentication is complete. The payment network computer 502 determines 406 a status of the transaction authentication confirmation and performs one of the following actions. If the transaction authentication is confirmed as being incomplete, the payment network declines 408 the transaction according to a block instruction stored in the payment network based on. If the transaction authentication is confirmed as being complete, the payment network computer 502 generates 410 a transaction bypass message to override the block instruction. The transaction bypass message directs the payment network computer 502 to forward the transaction to an issuer computer 504 for approval, while the block remains in place until the issuer computer 504 approves. The payment network computer 502 then transmits 412 the transaction bypass message to the issuer computer 504 to prompt the issuer computer 504 to either approve or decline the transaction.

Additionally, the payment network receives a response message from the issuer. The response message indicates whether the transaction is approved or declined. The method 400 also includes updating the customer authentication information in the transaction bypass message and processing the transaction accordingly based on the response message indicating that the transaction is approved. The method 400 further includes removing the block instruction based on the issuer computer's 504 response indicating that the transaction is approved or maintaining the block based on the transaction being declined. The method 400 also includes sending a notice message to a merchant computer 508. The notice message includes the transaction bypass message and the issuer's 504 decision and indicating the status of the block instruction against the merchant 508.

FIG. 5 illustrates an overview of various entity interactions in a payment network system 500, in accordance with at least aspect of the present disclosure. The payment network system 500 may include a payment network 502, an issuer 504, an account holder 506, a merchant 508, and an acquirer 510. A communication network 512 provides communications pathway for each of the payment network 502, the issuer 504, the account holder 506, the merchant 508, and the acquirer 510. The payment network 502, the issuer 504, the merchant 508, and the acquirer 510 include one or more than one computer apparatus 3000 described with reference to FIG. 6. The account holder 506 may include a client device or user device to communicate with the issuer 504, merchant 508, or other aspects of the payment network system 500 through the communication network 512. The communication network 512 may be implemented as the computer system 4000 described with reference to FIG. 7.

Turning back to FIG. 5, the issuer 504 may represent an issuer processor of a business entity (e.g., a bank) that may have issued an account (e.g., credit account, debit account, etc.) for payment transactions. In some implementations, the business entity (bank) associated with the issuer 504 also may function as an acquirer 510. The issuer 504 may issue an account represented by a primary account number (PAN) to an account holder 506, upon request of the account holder 506. The account holder 506 may use the account to conduct payment transactions. The issuer 504 may be responsible for authorization and ongoing risk management in the payment network system 500. The issuer 504 may need to accommodate any data fields provided in messages passed to and from the issuer, as defined in the disclosed embodiments in order to properly process payment transaction requests.

The account holder 506 may wish to conduct a payment transaction with a merchant 508 using the account (represented by the PAN) issued by the issuer 504. For security purposes discussed herein, the account holder 506 may not wish to share the PAN with the merchant 508.

In some embodiments, information between the account holder 506 and the merchant 508 may be passed through a near field communication (NFC) (e.g., point-of-sale use case). Yet in other embodiments, the merchant 508 may already know the PAN of the account holder 506 (e.g., card-on-file use case). For example, the card-on-file merchant may store the account information of the account holder 506 on file (e.g., at a merchant database) for future payment purposes, such as various types of periodic payments (e.g., monthly utilities payments). In some implementations, an account holder 506 may register with one or more merchants 508 for card-on-file services.

According to various embodiments, issuer verification of the account holder may be performed via 3-D Secure Access Control Server (ACS), mobile banking verification of the account holder with an authentication code, federated login systems, API functionality capable of generating, delivering, and validating data from the token requestor and shared secrets, one-time password (OTP), activation code, or other shared secret between the issuer 504 and the account holder 506. If the issuer 504 determines that there is a need to verify the account holder 506 requesting the token through an explicit verification (e.g., using an OTP or activation code), the shared secret may be delivered to the account holder 506 through an out-of-band channel.

The issuer 504 may use a plurality of methods for account holder authentication. According to some embodiments, static passwords and enrollment in an authentication service at the time of the account holder authentication may not be allowed for ID&V methods. In contrast, as provided above, one-time passwords may be used for account holder authentication by the issuer 504. When an OTP is used, the issuer 504 may require that the OTP has a length of at least 6 digits and no more than 8 digits, the OTP is generated using a uniform methodology, and the preferred method for delivery is a secure channel from the issuer 504 to a consumer device of the account holder 506 (e.g., a mobile banking application installed on the consumer device).

The acquirer 510 may be a system (acquirer computer or server) for an entity (e.g., a bank) that has a business relationship with the merchant 508. The acquirer 510 may issue and manage a financial account for the merchant 508. In general, the acquirer 510 may be responsible for authorization, capture, clearing and exception processing within the payment network system 500. The acquirer 510 may be communicatively coupled to the merchant 508 and the payment network 502. The acquirer 510 routes the authorization request message including the token to the issuer 504 via the payment network 502. The acquirer 510 also may route an authorization response message received from the issuer 504 via the payment network 502 to the merchant 508.

The payment network 502 (also referred as a payment processing network) may be communicatively coupled to the issuer 504 and the acquirer 510. The payment network 502 provides authorization services and clearing and settlement services for payment transactions. The payment network 502 may include data processing subsystems, wired or wireless networks, including the internet. The payment network 502 may include a server computer. In some implementations, the payment network 502 may forward the authorization request message received from the acquirer 510 to the issuer 504 via a communication channel. The authorization request message received from the acquirer 510 may include a token.

FIG. 6 is a block diagram of a computer apparatus 3000 comprising data processing subsystems or components, in accordance with at least one aspect of the present disclosure. The subsystems shown in FIG. 6 are interconnected via a system bus 3010. Additional subsystems such as a printer 3018, keyboard 3026, fixed disk 3028 (or other memory comprising computer readable media), monitor 3022, which is coupled to a display adapter 3020, and others are shown. Peripherals and input/output (I/O) devices, which couple to an I/O controller 3012 (which may be a processor or other suitable controller), can be connected to the computer system by any number of means known in the art, such as a serial port 3024. For example, the serial port 3024 or external interface 3030 can be used to connect the computer apparatus to a wide area network such as the Internet, a mouse input device, or a scanner. The interconnection via system bus allows the central processor 3016 to communicate with each subsystem and to control the execution of instructions from system memory 3014 or the fixed disk 3028, as well as the exchange of information between subsystems. The system memory 3014 and/or the fixed disk 3028 may embody a computer readable medium.

As previously discussed, the payment network 502, the issuer 504, the account holder, and/or the merchant 508 may be interconnected and communicate via one or more than one network to facilitate the implementation of the methods 100, 200 described herein with reference to FIGS. 1-5 using the computing system 4000 described hereinbelow with reference to FIG. 7.

FIG. 7 is a diagrammatic representation of an example computing system 4000 that includes a host machine 4002 within which a set of instructions to implement any one or more the systems, components, and/or methodologies discussed herein, in accordance with at least one aspect of the present disclosure. In various aspects, the host machine 4002 operates as a standalone device or may be connected (e.g., networked) to other machines. In a networked deployment, the host machine 4002 may operate in the capacity of a server or a client machine in a server-client network environment, or as a peer machine in a peer-to-peer (or distributed) network environment. The host machine 4002 may be a computer or computing device, a personal computer (PC), a tablet PC, a set-top box (STB), a personal digital assistant (PDA), a cellular telephone, a portable music player (e.g., a portable hard drive audio device such as an Moving Picture Experts Group Audio Layer 3 (MP3) player), a web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computing system 4000 includes the host machine 4002, running a host operating system (OS) 4004 on a processor or multiple processor(s)/processor core(s) 4006 (e.g., a central processing unit (CPU), a graphics processing unit (GPU), or both), and various memory nodes 4008. The host OS 4004 may include a hypervisor 4010 which is able to control the functions and/or communicate with a virtual machine ("VM") 4012 running on machine readable media. The VM 4012 also may include a virtual CPU or vCPU 4014. The memory nodes 4008 may be linked or pinned to virtual memory nodes or vNodes 4016. When the memory node 4008 is linked or pinned to a corresponding vNode 4016, then data may be mapped directly from the memory nodes 4008 to the corresponding vNode 4016.

All the various components shown in host machine 4002 may be connected with and to each other or communicate to each other via a bus (not shown) or via other coupling or communication channels or mechanisms. The host machine 4002 may further include a video display, audio device or other peripherals 4018 (e.g., a liquid crystal display (LCD), alphanumeric input device(s) including, e.g., a keyboard, a cursor control device, e.g., a mouse, a voice recognition or biometric verification unit, an external drive, a signal generation device, e.g., a speaker,) a persistent storage device 4020 (also referred to as disk drive unit), and a network interface device 4022. The host machine 4002 may further include a data encryption module (not shown) to encrypt data. The components provided in the host machine 4002 are those typically found in computer systems that may be suitable for use with aspects of the present disclosure and are intended to represent a broad category of such computer components that are known in the art. Thus, the system 4000 can be a server, minicomputer, mainframe computer, or any other computer system. The computer may also include different bus configurations, networked platforms, multi-processor platforms, and the like. Various operating systems may be used including UNIX, LINUX, WINDOWS, QNX ANDROID, IOS, CHROME, TIZEN, and other suitable operating systems.

The disk drive unit 4024 also may be a Solid-state Drive (SSD), a hard disk drive (HDD) or other includes a computer or machine-readable medium on which is stored one or more sets of instructions and data structures (e.g., data/instructions 4026) embodying or utilizing any one or more of the methodologies or functions described herein. The data/instructions 4026 also may reside, completely or at least partially, within the main memory node 4008 and/or within the processor(s) 4006 during execution thereof by the host machine 4002. The data/instructions 4026 may further be transmitted or received over a network 4028 via the network interface device 4022 utilizing any one of several well-known transfer protocols (e.g., Hyper Text Transfer Protocol (HTTP)).

The processor(s) 4006 and memory nodes 4008 also may comprise machine-readable media. The term "computer-readable medium" or "machine-readable medium" should be taken to include a single medium or multiple medium (e.g., a centralized or distributed database and/or associated caches and servers) that store the one or more sets of instructions. The term "computer-readable medium" shall also be taken to include any medium that is capable of storing, encoding, or carrying a set of instructions for execution by the host machine 4002 and that causes the host machine 4002 to perform any one or more of the methodologies of the present application, or that is capable of storing, encoding, or carrying data structures utilized by or associated with such a set of instructions. The term "computer-readable medium" shall accordingly be taken to include, but not be limited to, solid-state memories, optical and magnetic media, and carrier wave signals. Such media may also include, without limitation, hard disks, floppy disks, flash memory cards, digital video disks, random access memory (RAM), read only memory (ROM), and the like. The example aspects described herein may be implemented in an operating environment comprising software installed on a computer, in hardware, or in a combination of software and hardware.

One skilled in the art will recognize that Internet service may provide Internet access to one or more computing devices that are coupled to the Internet service, and that the computing devices may include one or more processors, buses, memory devices, display devices, input/output devices, and the like. Furthermore, those skilled in the art may appreciate that the Internet service may be coupled to one or more databases, repositories, servers, and the like, which may be utilized to implement any of the various aspects of the disclosure as described herein.

The computer program instructions also may be loaded onto a computer, a server, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

Suitable networks may include or interface with any one or more of, for instance, a local intranet, a PAN (Personal Area Network), a LAN (Local Area Network), a WAN (Wide Area Network), a MAN (Metropolitan Area Network), a virtual private network (VPN), a storage area network (SAN), a frame relay connection, an Advanced Intelligent Network (AIN) connection, a synchronous optical network (SONET) connection, a digital T1, T3, E1 or E3 line, Digital Data Service (DDS) connection, DSL (Digital Subscriber Line) connection, an Ethernet connection, an ISDN (Integrated Services Digital Network) line, a dial-up port such as a V.90, V.34 or V.34bis analog modem connection, a cable modem, an ATM (Asynchronous Transfer Mode) connection, or an FDDI (Fiber Distributed Data Interface) or CDDI (Copper Distributed Data Interface) connection. Furthermore, communications may also include links to any of a variety of wireless networks, including WAP (Wireless Application Protocol), GPRS (General Packet Radio Service), GSM (Global System for Mobile Communication), CDMA (Code Division Multiple Access) or TDMA (Time Division Multiple Access), cellular phone networks, GPS (Global Positioning System), CDPD (cellular digital packet data), RIM (Research in Motion, Limited) duplex paging network, Bluetooth radio, or an IEEE 802.11-based radio frequency network. The network 4028 can further include or interface with any one or more of an RS-232 serial connection, an IEEE-1394 (Firewire) connection, a Fiber Channel connection, an IrDA (infrared) port, a SCSI (Small Computer Systems Interface) connection, a USB (Universal Serial Bus) connection or other wired or wireless, digital or analog interface or connection, mesh or Digi^{®} networking.

In general, a cloud-based computing environment is a resource that typically combines the computational power of a large grouping of processors (such as within web servers) and/or that combines the storage capacity of a large grouping of computer memories or storage devices. Systems that provide cloud-based resources may be utilized exclusively by their owners or such systems may be accessible to outside users who deploy applications within the computing infrastructure to obtain the benefit of large computational or storage resources.

The cloud is formed, for example, by a network of web servers that comprise a plurality of computing devices, such as the host machine 4002, with each server 4030 (or at least a plurality thereof) providing processor and/or storage resources. These servers manage workloads provided by multiple users (e.g., cloud resource customers or other users). Typically, each user places workload demands upon the cloud that vary in real-time, sometimes dramatically. The nature and extent of these variations typically depends on the type of business associated with the user.

It is noteworthy that any hardware platform suitable for performing the processing described herein is suitable for use with the technology. The terms "computer-readable storage medium" and "computer-readable storage media" as used herein refer to any medium or media that participate in providing instructions to a CPU for execution. Such media can take many forms, including, but not limited to, non-volatile media, volatile media, and transmission media. Non-volatile media include, for example, optical or magnetic disks, such as a fixed disk. Volatile media include dynamic memory, such as system RAM. Transmission media include coaxial cables, copper wire, and fiber optics, among others, including the wires that comprise one aspect of a bus. Transmission media can also take the form of acoustic or light waves, such as those generated during radio frequency (RF) and infrared (IR) data communications. Common forms of computer-readable media include, for example, a flexible disk, a hard disk, magnetic tape, any other magnetic medium, a CD-ROM disk, digital video disk (DVD), any other optical medium, any other physical medium with patterns of marks or holes, a RAM, a PROM, an EPROM, an EEPROM, a FLASH EPROM, any other memory chip or data exchange adapter, a carrier wave, or any other medium from which a computer can read.

Various forms of computer-readable media may be involved in carrying one or more sequences of one or more instructions to a CPU for execution. A bus carries the data to system RAM, from which a CPU retrieves and executes the instructions. The instructions received by system RAM can optionally be stored on a fixed disk either before or after execution by a CPU.

Computer program code for carrying out operations for aspects of the present technology may be written in any combination of one or more programming languages, including an object-oriented programming language such as Java, Smalltalk, C++, or the like and conventional procedural programming languages, such as the "C" programming language, Go, Python, or other programming languages, including assembly languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Examples of the devices, systems, and methods according to various aspects of the present disclosure are provided below in the following numbered clauses. An aspect of any of the devices(s), method(s) and/or system(s) may include any one or more than one, and any combination of, the numbered clauses described below.

Clause 1. A computer-implemented method for creating a transaction bypass of a user-requested block of a merchant, the method comprising: receiving, by a payment network computer, an authorization request message from a merchant computer; determining, by payment network computer, whether a merchant matches an active block instruction; determining, by the payment network computer, a presence of customer authentication information in the authorization request message; generating, by the payment network computer, a transaction bypass message based on the presence of customer authentication information in the authorization request message and a matching active block instruction of the merchant; sending, by the payment network computer, the transaction bypass message to an issuer computer; receiving, by the payment network computer, a response message from the issuer computer; and removing, by the payment network computer, the active block instruction of the merchant based on the response message comprising an approve message from the issuer computer.

Clause 2. The computer-implemented method of Clause 1, wherein the response message from the issuer computer comprises a decline message and wherein the method comprises maintaining, by the payment network computer, the active block instruction of the merchant based on the response message comprising the decline message from the issuer computer.

Clause 3. The computer-implemented method of any one of Clauses 1-2, wherein the customer authentication information in the authorization request message comprises an authentication indication.

Clause 4. The computer-implemented method of Clause 3, wherein the authentication indication is a strong customer authentication indication.

Clause 5. The computer-implemented method of any one of Clauses 1-4 wherein the method comprises receiving, by the payment network computer, an authentication indication from a user device.

Clause 6. The computer-implemented method of Clause 5, wherein the authentication indication is a successful authentication from the user device.

Clause 7. The computer-implemented method of any one of Clauses 1-6, wherein the customer authentication information in the authorization request message comprises authentication data, and wherein the method comprises: sending, by the payment network computer, the authentication data to the issuer computer for authentication verification.

Clause 8. The computer-implemented method of any one of Clauses 1-7, wherein the active block instruction is stored in a server, wherein the server further stores a user profile, and wherein the method comprises determining, by the payment network computer, whether the active block instruction is associated with the user profile.

Clause 9. The computer-implemented method of any one of Clauses 1-8, wherein the method comprises periodically receiving, by the payment network computer, the authorization request message periodically generated by the merchant computer.

Clause 10. The computer-implemented method of any one of Clauses 1-9, wherein the authorization request message comprises: an authentication indicator; a transaction amount; a merchant identifier; and a user profile.

Clause 11. The computer-implemented method of any one of Clauses 1-10, wherein the authorization request message comprises initial request data, and wherein the transaction bypass message comprises the initial request data.

Clause 12. The computer-implemented method of Clause 2, wherein the method comprises: generating, by the payment network computer, a notice message based on the response message, wherein the notice message comprises a transaction status indicator; and sending, by the payment network computer, the notice message to the merchant computer.

Clause 13. The computer-implemented method of any one of Clauses 1-12, wherein the notice message comprises a block status indicator, wherein the block status indicator represents whether the user-requested block is active.

Clause 14. The computer-implemented method of any one of Clauses 1-13, wherein the method comprises: maintaining, by the payment network computer, an authentication security threshold; receiving, by the payment network computer, a response message from the issuer computer; comparing, by the payment network computer, an authentication indication in the authorization request message to the authentication security threshold; and maintaining, by the payment network computer, the active block instruction based on the authentication indication below the authentication security threshold and the response message comprising the approve message; and removing, by the payment network computer, the active block instruction based on the authentication indication equal to or above the authentication security threshold and the response message comprising the approve message.

Clause 15. A computer-implemented method for creating a transaction bypass and removal of a user-requested block of a merchant, the method comprising: receiving, by a payment network computer, an authorization request message from a merchant computer; receiving, by the payment network computer, an authentication indication from a user device; generating, by the payment network computer, a transaction bypass of a user-requested block based on the authentication indicator; removing, by the payment network computer, the user-requested block based on the transaction bypass message; generating, by the payment network computer, a referral message based on the transaction bypass, wherein the referral message comprises the authentication indication; sending, by the payment network computer, the referral message to an issuer computer; receiving, by the payment network computer, a response message from the issuer computer; and reviving, by the payment network computer, the user-requested block based on the response message comprising a decline message.

Clause 16. The computer-implemented method of Clause 15, wherein the authorization request message comprises the authentication indication.

Clause 17. The computer-implemented method of any one of Clauses 15-16, wherein the authentication indication is a strong customer authentication indicator.

Clause 18. The computer-implemented method of any one of Clauses 15-17, wherein the user-requested block is stored in a server, wherein the server further stores a user profile, and wherein the method comprises: determining, by the payment network computer, whether the user-requested block is associated with the user profile; and removing, by the payment network computer, the user-requested block from the user profile based on the response message comprising an approve message.

Clauses 19. The computer-implemented method of any one of Clauses 15-18, wherein the method further comprises: generating, by the payment network computer, a notice message based on the response message, wherein the notice message comprises a transaction status indicator; and sending, by the payment network computer, the notice message to the merchant computer.

Clause 20. The computer-implemented method of Clause 19, wherein the notice message further comprises a block status indicator, wherein the block status indicator represents whether the user-requested block is active.

Clause 21. A computer-implemented method for creating a transaction bypass and removal of a user-imposed block on a merchant, the computer-implemented method comprising: receiving an authorization request message from a merchant computer associated with a transaction; receiving an authentication indicator from a user device, confirming the user's consent to proceed with the transaction despite the user-imposed block; generating a transaction bypass in response to the received authentication indicator, enabling the transaction to proceed despite the user-imposed block; and removing, by the payment network computer, the user-imposed block on the merchant based on the generated transaction bypass.

Clause 22. The computer-implemented method of clause 21, comprising generating a referral message containing the transaction bypass and authentication indicator.

Clause 23. The computer-implemented method of clause 21 or 22, wherein the authentication indicator is a strong customer authentication indicator.

Clause 24. The computer-implemented method of clause 22 or 23, comprising sending, by the payment network computer, the referral message to an issuer for further processing.

Clause 25. The computer-implemented method of any of clauses 21 to 24, comprising receiving a response message from the issuer computer, the response message indicating approval or decline of the transaction.

Clause 26. The computer-implemented method of clause 25, comprising maintaining the user-imposed block based on the response message from the issuer computer including a decline of the transaction.

Further, it is understood that any one or more of the following-described forms, expressions of forms, examples, can be combined with any one or more of the other following-described forms, expressions of forms, and examples.

While several forms have been illustrated and described, it is not the intention of Applicant to restrict or limit the scope of the appended claims to such detail. Numerous modifications, variations, changes, substitutions, combinations, and equivalents to those forms may be implemented and will occur to those skilled in the art without departing from the scope of the present disclosure. Moreover, the structure of each element associated with the described forms can be alternatively described as a means for providing the function performed by the element. Also, where materials are disclosed for certain components, other materials may be used. It is therefore to be understood that the foregoing description and the appended claims are intended to cover all such modifications, combinations, and variations as falling within the scope of the disclosed forms. The appended claims are intended to cover all such modifications, variations, changes, substitutions, modifications, and equivalents.

As used herein, a "server" may include one or more computing devices which may be individual, stand-alone machines located at the same or different locations, may be owned or operated by the same or different entities, and may further be one or more clusters of distributed computers or "virtual" machines housed within a datacenter. It should be understood and appreciated by a person of skill in the art that functions performed by one "server" can be spread across multiple disparate computing devices for various reasons. As used herein, a "server" is intended to refer to all such scenarios and should not be construed or limited to one specific configuration. Further, a server as described herein may, but need not, reside at (or be operated by) a merchant, a payment network, a financial institution, a healthcare provider, a social media provider, a government agency, or agents of any of the aforementioned entities. The term "server" may also refer to or include one or more processors or computers, storage devices, or similar computer arrangements that are operated by or facilitate communication and processing for multiple parties in a network environment, such as the Internet, although it will be appreciated that communication may be facilitated over one or more public or private network environments and that various other arrangements are possible. Further, multiple computers, e.g., servers, or other computerized devices, e.g., point-of-sale devices, directly or indirectly communicating in the network environment may constitute a "system," such as a merchant's point-of-sale system. Reference to "a server" or "a processor," as used herein, may refer to a previously recited server and/or processor that is recited as performing a previous step or function, a different server and/or processor, and/or a combination of servers and/or processors. For example, as used in the specification and the claims, a first server and/or a first processor that is recited as performing a first step or function may refer to the same or different server and/or a processor recited as performing a second step or function.

As used herein, a "server computer" may describe a powerful computer or cluster of computers. For example, the server computer can be a large mainframe, a minicomputer cluster, or a group of servers functioning as a unit. The server computer may be associated with an entity such as a payment processing network, a wallet provider, a merchant, an authentication cloud, an acquirer or an issuer. In one example, the server computer may be a database server coupled to a Web server. The server computer may be coupled to a database and may include any hardware, software, other logic, or combination of the preceding for servicing the requests from one or more client computers. The server computer may comprise one or more computational apparatuses and may use any of a variety of computing structures, arrangements, and compilations for servicing the requests from one or more client computers. In some embodiments or aspects, the server computer may provide and/or support payment network cloud service.

Reference to "a device," "a server," "a processor," and/or the like, as used herein, may refer to a previously recited device, server, or processor that is recited as performing a previous step or function, a different server or processor, and/or a combination of servers and/or processors. For example, as used in the specification and the claims, a first server or a first processor that is recited as performing a first step or a first function may refer to the same or different server or the same or different processor recited as performing a second step or a second function.

One or more components may be referred to herein as "configured to," "configurable to," "operable/operative to," "adapted/adaptable," "able to," "conformable/conformed to," etc. Those skilled in the art will recognize that "configured to" can generally encompass active-state components and/or inactive-state components and/or standby-state components, unless context requires otherwise.

Those skilled in the art will recognize that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to claims containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that typically a disjunctive word and/or phrase presenting two or more alternative terms, whether in the description, claims, or drawings, should be understood to contemplate the possibilities of including one of the terms, either of the terms, or both terms unless context dictates otherwise. For example, the phrase "A or B" will be typically understood to include the possibilities of "A" or "B" or "A and B."

With respect to the appended claims, those skilled in the art will appreciate that recited operations therein may generally be performed in any order. Also, although various operational flow diagrams are presented in a sequence(s), it should be understood that the various operations may be performed in other orders than those which are illustrated, or may be performed concurrently. Examples of such alternate orderings may include overlapping, interleaved, interrupted, reordered, incremental, preparatory, supplemental, simultaneous, reverse, or other variant orderings, unless context dictates otherwise. Furthermore, terms like "responsive to," "related to," or other past-tense adjectives are generally not intended to exclude such variants, unless context dictates otherwise.

It is worthy to note that any reference to "one aspect," "an aspect," "an exemplification," "one exemplification," and the like means that a particular feature, structure, or characteristic described in connection with the aspect is included in at least one aspect. Thus, appearances of the phrases "in one aspect," "in an aspect," "in an exemplification," and "in one exemplification" in various places throughout the specification are not necessarily all referring to the same aspect. Furthermore, the particular features, structures, or characteristics may be combined in any suitable manner in one or more aspects.

As used herein, the singular form of "a," "an," and "the" include the plural references unless the context clearly dictates otherwise.

Any patent application, patent, non-patent publication, or other disclosure material referred to in this specification and/or listed in any Application Data Sheet is incorporated by reference herein, to the extent that the incorporated materials is not inconsistent herewith. As such, and to the extent necessary, the disclosure as explicitly set forth herein supersedes any conflicting material incorporated herein by reference. Any material, or portion thereof, that is said to be incorporated by reference herein, but which conflicts with existing definitions, statements, or other disclosure material set forth herein will only be incorporated to the extent that no conflict arises between that incorporated material and the existing disclosure material.

In summary, numerous benefits have been described which result from employing the concepts described herein. The foregoing description of the one or more forms has been presented for purposes of illustration and description. It is not intended to be exhaustive or limiting to the precise form disclosed. Modifications or variations are possible in light of the above teachings. The one or more forms were chosen and described in order to illustrate principles and practical application to thereby enable one of ordinary skill in the art to utilize the various forms and with various modifications as are suited to the particular use contemplated. It is intended that the claims submitted herewith define the overall scope.

## Claims

1. A method for processing a transaction within a payment network, the method comprising:
receiving customer authentication information from a user device during a transaction;
determining, based on the customer authentication information, whether transaction authentication is complete;
performing one of the following actions based on a status of the transaction authentication confirmation:
declining the transaction according to a block instruction stored in the payment network based on the transaction authentication not being confirmed as complete; or
generating a transaction bypass message to override the block instruction, wherein the transaction bypass message directs the payment network to forward the transaction to an issuer for approval, while the block remains in place until issuer approval; and
transmitting the transaction bypass message to the issuer to prompt the issuer to either approve or decline the transaction based on the transaction authentication being confirmed as complete.

2. The method of claim 1, comprising receiving a response message from the issuer, the response message indicating whether the transaction is approved or declined.

3. The method of claim 2, comprising updating the customer authentication information in the transaction bypass message and processing the transaction accordingly based on the response message indicating that the transaction is approved.

4. The method of claim 2, comprising removing the block instruction based on the response message indicating that the transaction is approved or maintaining the block based on the transaction being declined.

5. The method of any of claims 1 to 4, comprising sending a notice message to a merchant, the notice message including the transaction bypass message and the issuer's decision and indicating the status of the block instruction against the merchant.

6. A computer-implemented method for enabling a transaction bypass for a merchant subject to a user-initiated block, the computer-implemented method comprising:
receiving an authorization request message from a merchant computer;
determining whether the merchant in the authorization request matches an active block instruction associated with the user;
analyzing the authorization request message to identify the presence of customer authentication information;
generating a transaction bypass message when both customer authentication information is present in the authorization request message and the merchant matches an active block instruction; and
transmitting the transaction bypass message to an issuer for determining whether to approve or decline the transaction.

7. The computer-implemented method of claim 6, comprising:
receiving a decline message from the issuer; and
maintaining the active block instruction associated with the merchant based on the decline message.

8. The computer-implemented method of claim 6, comprising:
receiving an approval message; and
removing the block instruction based on the approval message.

9. The computer-implemented method of claim 6, further comprising receiving an authentication indicator from a user device, wherein the authentication indicator represents a successful authentication from the user device.

10. The computer-implemented method of claim 6, further comprising:
generating a message including a transaction block status indicator representing whether the user-initiated block remains active; and
notifying the merchant of the message.

11. The computer-implemented method of any of claims 6 to 9, comprising maintaining an authentication security threshold.

12. The computer-implemented method of claim 11 when dependent on claim 9, comprising:
receiving a response message from the issuer computer; and
comparing the authentication indicator to the authentication security threshold.

13. The computer-implemented method of claim 12, comprising maintaining the active block instruction based on the authentication indicator being below the authentication security threshold and the response message includes an approval.

14. The computer-implemented method of claim 12, comprising removing the active block instruction based on the authentication indicator meeting or exceeding the authentication security threshold and the response message includes an approval.

15. A payment network computer comprising:
a processor; and
a non-transitory computer readable medium comprising code executable by the processor to perform a method according to any of the preceding claims.
